# EUROPÄISCHE PATENTSCHRIFT

(11) **EP 2 860 514 B1**
(45) Veröffentlichungstag und Bekanntmachung des Hinweises auf die Patenterteilung: **16.09.2015**
(21) Anmeldenummer: 14183664.3
(22) Anmeldetag: 05.09.2014
(51) Int. Cl.: G01N 21/15, G01N 21/51, G01N 21/53

(54) **Vorrichtung zur Messung der Lichtstreuung und Verfahren zum Prüfen einer Empfangsoptik**
Device for the measurement of light scattering and method for testing reception optics
Dispositif de mesure de la diffusion de lumière et procédé de contrôle d'un collecteur de lumière

(30) Priorität: 11.10.2013 DE 102013111256
(43) Veröffentlichungstag der Anmeldung: 15.04.2015
(73) Patentinhaber: SICK Engineering GmbH, 01458 Ottendorf-Okrilla (DE)
(72) Erfinder: Melcher, Uwe, 01458 Ottendorf-Okrilla (DE); Regehr, Jürgen, 01127 Dresden (DE)
(74) Vertreter: Hehl, Ulrich

(56) Entgegenhaltungen:
- EP-B1- 1 881 319

## Beschreibung

Die Erfindung betrifft eine Vorrichtung zur Messung der Lichtstreuung aus einem Messbereich und ein Verfahren zum Prüfen einer Empfangsoptik einer solchen Vorrichtung nach dem Oberbegriff von Anspruch 1 beziehungsweise 11.

Bei der Streulichtmessung wird ein Messvolumen mittels einer Lichtquelle durchstrahlt. Befinden sich in dem Messvolumen Streuzentren, beispielsweise Staubkörner oder sonstige Partikel, so wird das Licht aufgestreut. Ein im Winkel zu dem eingestrahlten Licht aufgestellte Lichtempfänger registriert dieses Streulicht, welches Rückschlüsse auf die Art und Menge der Partikel in dem Messvolumen zulässt. Die Streulichtmessung wird beispielsweise in der Umweltmesstechnik beziehungsweise Emissionsmesstechnik eingesetzt.

Im Laufe der Zeit kann durch Verschmutzung oder andere Effekte die Messgenauigkeit beeinträchtigt werden. Zum Ausgleich ist eine Selbsttestfunktion bekannt, die bei eignungsgeprüften Emissionsmessgeräten sogar vorgeschrieben ist. Eine Möglichkeit des Selbsttests besteht darin, die optische Grenzfläche des Lichtempfängers mit der Lichtquelle zu prüfen. Dazu wird der Lichtempfänger von seiner Messposition in eine Prüfposition verfahren, in welcher das Licht ohne Streuung in dem Messvolumen in direkter Sichtlinie empfangen wird. Eine erwartete Empfangsintensität in der Prüfposition entspricht dem maximalen Signal, so dass eine repräsentative Transmissionsmessung der optischen Grenzfläche ermöglicht wird. Ist die Empfangsoptik verschmutzt, wird das erwartete Signal entsprechend abgeschwächt, woraus auf eine Verschmutzung und deren Grad geschlossen werden kann.

Der Stand der Technik kennt verschiedene Konstruktionen, mit denen der Lichtempfänger in den Strahl der Lichtquelle bewegt werden kann. Im einfachsten Fall werden Lichtsender und Lichtempfänger zueinander verschwenkt, bis sie sich in direkter Sichtlinie befinden. Zur Vermeidung einer Übersteuerung kann in der Sichtlinie ein Dämpfungsfilter angeordnet werden. Will man Beeinträchtigungen der Empfangsoptik ortsaufgelöst erfassen, so wird für eine Relativbewegung während des Selbsttests gesorgt, damit der Lichtstrahl nach und nach die Empfangsoptik abscannt. Beispielsweise kann der Lichtdetektor auf einer Kreisbahn verschwenkt werden. Das hat aber den Nachteil, dass das Licht während des Selbsttests in unterschiedlichen Winkeln einfällt und so das Ergebnis verfälscht.

Eine weitere herkömmliche Schiebemechanik ordnet den Lichtempfänger am freien Ende einer Blattfeder an. Für den Selbsttest wird die Blattfeder durch einen Schieber verbogen, bis der Lichtempfänger in Sichtlinie des Lichtsenders steht. Dann genügen kleine Bewegungen der Blattfeder, um die gewünschte Abtastung zu erreichen. Auch bei dieser Konstruktion bewegt sich der Lichtempfänger auf einer Kreisbahn. Außerdem kann die Blattfeder durch die wechselnden mechanischen Belastungen ermüden und im schlimmsten Fall brechen.

Aus der EP 1 881 319 B1 ist bekannt, eine Empfangsoptik einer Vorrichtung zur Messung der Lichtstreuung zu überprüfen, indem die Empfangsoptik durch eine Zwangskurve geführt wird. Diese Zwangskurve weist zwei Abschnitte auf, wobei die Empfangsoptik bei Verfahren auf dem ersten Abschnitt von dem ausgesandten Lichtstrahl überstrichen und so getestet wird, während der zweite Abschnitt dafür sorgt, dass die Empfangsoptik von der Messposition in die anfängliche Prüfposition überführt wird. Diese Konstruktion löst das Problem, ist jedoch konstruktiv nicht für alle Streulichtmessgeräte nutzbar.

Insgesamt sind die bekannten Mechaniken zwar in einigen Anwendungen bewährt, erfüllen jedoch nicht immer die Genauigkeitsanforderungen, beanspruchen zu viel Bauraum oder sind aus anderen Gründen konstruktiv nicht für jede Anwendung geeignet.

Es ist daher Aufgabe der Erfindung, eine Alternative zum Durchführen eines Selbsttests anzugeben.

Diese Aufgabe wird durch eine Vorrichtung zur Messung der Lichtstreuung aus einem Messbereich und ein Verfahren zum Prüfen einer Empfangsoptik einer solchen Vorrichtung nach Anspruch 1 beziehungsweise 8 gelöst. Für eine Streulichtmessung wird zwischen einem Messmodus und einem Prüfmodus gewechselt. In dem Messmodus stehen die optischen Achsen von Lichtsender und Empfangsoptik in einem Winkel zueinander, insbesondere einem spitzen Winkel, so dass keine direkte Sichtlinie von Lichtsender zu Lichtempfänger besteht. Auf diese Weise wird Licht registriert, das von einem zu prüfenden Medium, wie einem Aerosol, in dem Messbereich oder Messvolumen gestreut wird. In dem Prüfmodus wird die Empfangsoptik auf Verschmutzungen oder sonstige Beeinträchtigungen geprüft. Dabei geht die Erfindung von dem Grundgedanken aus, die Empfangsoptik drehbar an einer verschiebbaren Drehachse zu haltern. Dies ermöglicht, zunächst die Empfangsoptik um die Drehachse zu verschwenken, bis deren optische Achse parallel zu der optischen Achse des Lichtsenders liegt. Anschließend wird dann die Drehachse verschoben, was zu einer Parallelverschiebung der optischen Achse der Empfangsoptik führt, die auf diese Weise unter direkter Sichtlinie zum Lichtsender nach und nach abgetastet werden kann.

Die Erfindung hat den Vorteil, dass eine mechanische Konstruktion gefunden wurde, welche gesetzte Randbedingungen an Größe, Form und Anordnung der Komponenten erfüllt, wie beispielsweise ein vorgegebenes Gehäuse oder eine bestimmte Positionierung und Ausrichtung der optischen Komponenten. Dabei wird eine hohe Stabilität und Lebensdauer der mechanischen Verstellung bei gleichzeitig günstiger Herstellung und einfacher Montage, Inbetriebnahme und Justage erzielt.

Die Empfangsoptik ist an einem ersten Halteelement befestigt, das drehbar an der verschiebbaren Drehachse gehaltert ist. Die Empfangsoptik selbst bietet häufig keinen mechanischen Angriffspunkt für die Drehachse, so dass sie stattdessen an dem ersten Halteelement fixiert wird. Dadurch vollzieht die Empfangsoptik Drehungen und Verschiebungen des ersten Halteelements direkt mit.

Die Lichtstreumessvorrichtung weist bevorzugt ein drehfestes zweites Halteelement auf, von dem die Drehachse ausgeht. Die Drehachse verbindet somit zweites Halteelement und erstes Halteelement beziehungsweise Empfangsoptik. Dabei bildet das zweite Halteelement das drehfest ruhende Gegenstück, gegen das die Empfangsoptik um die Drehachse verschwenkt wird.

Das zweite Halteelement ist bevorzugt verschiebbar gelagert, insbesondere auf mindestens einer Schiene oder Linearführung. Die mögliche Verschiebungsrichtung hat zumindest eine Komponente senkrecht zu der optischen Achse des Lichtsenders. Dies dient dazu, die Drehachse und damit die Empfangsoptik in dem Prüfmodus während des Abscannens durch den Lichtstrahl zu fahren.

Vorzugsweise ist ein erstes Rückstellelement vorgesehen, um die Empfangsoptik beim Wechsel von dem Prüfmodus in den Messmodus in eine Ausgangsposition zurückzuschieben. Beispielsweise weist das erste Rückstellelement eine Feder auf, die während der Verschiebung der Drehachse gedehnt wird und sie anschließend in eine Ruhestellung zurückzieht. Das erste Rückstellelement ist vorzugsweise an dem zweiten Halteelement und einem Fixpunkt, etwa einem Gehäuse befestigt.

Die Verstelleinheit weist ein Schiebeelement auf, das geradlinig von einer ersten Position in eine zweite Position verschiebbar ist. Die geradlinige Verschiebung des Schiebeelements wird in die zweigeteilte Schwenk- und Translationsbewegung überführt. Das Schiebelement greift an der Empfangsoptik oder dem ersten Halteelement an einem Punkt versetzt zu der Drehachse an. Anfangs weicht die Empfangsoptik durch Verschwenken aus. Wenn die optischen Achsen von Empfangsoptik und Lichtsender parallel stehen, endet die Verschwenkbewegung, und das Schiebeelement bewirkt die Parallelverschiebung der Empfangsoptik, um sie abzuscannen.

Eine abgeschrägte Fläche des Schiebeelements steht mit der Empfangsoptik oder dem ersten Halteelement in Berührung. Die abgeschrägte Fläche bildet den Angriffsbereich, mit dem die Empfangsoptik verschwenkt und dann verschoben wird. Vorzugsweise haben Empfangsoptik beziehungsweise erstes Halteelement eine entsprechende schräge Fläche, welche die abgeschrägte Fläche des Schiebeelements berührt.

Vorzugsweise ist ein erster Anschlag vorgesehen, insbesondere auf dem zweiten Halteelement, um die Drehbewegung zu beenden, wenn die optische Achse der Empfangsoptik parallel zu der optischen Achse des Lichtsenders steht. Der erste Anschlag verhindert also eine Drehbewegung über die gewünschte parallele Prüfstellung mit direkter Sichtlinie hinaus. Sobald das Ende der Drehbewegung erreicht ist, zwingt der erste Anschlag dazu, einer weiteren Einwirkung durch die Verstelleinheit, insbesondere eines Schiebeelements mit schräger Angriffsfläche, anders auszuweichen als durch Fortsetzen der Drehbewegung, nämlich durch eine für die Abtastung der Empfangsoptik genutzte Verschiebung.

Vorzugsweise ist ein zweites Rückstellelement vorgesehen, um die Empfangsoptik beim Wechsel von dem Prüfmodus in den Messmodus in eine Ausgangsposition zurückzudrehen. Wird also die Verschiebeeinheit beziehungsweise ein Schiebeelement entlastet, so dreht sich die Empfangsoptik in ihre Messposition zurück, in welcher sie in einem Winkel zu dem Lichtstrahl steht. Bei dem zweiten Rückstellelement kann es sich um eine Feder handeln, die beispielsweise zwischen der Empfangsoptik beziehungsweise dem ersten Halteelement und dem zweiten Halteelement befestigt ist.

Vorzugsweise ist ein zweiter Anschlag vorgesehen, insbesondere auf dem zweiten Halteelement, um die Empfangsoptik höchstens bis in die Ausgangsposition zurückzudrehen. Dadurch wird beim Wechsel vom Prüfmodus in den Messmodus verhindert, dass eine Rückdrehung über den gewünschten Streuwinkel hinaus erfolgt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer Vorrichtung zur Messung der Lichtstreuung in einem Messmodus;
- Fig. 2: eine schematische Darstellung der Vorrichtung gemäß Figur 1 beim Wechsel in einen Prüfmodus nach Abschluss einer Drehbewegung und zu Beginn einer sich anschließenden Verschiebung; und
- Fig. 3: eine schematische Darstellung der Vorrichtung gemäß Figur 1 nach Abschluss der in einer Position gemäß Figur 2 begonnenen Verschiebung.

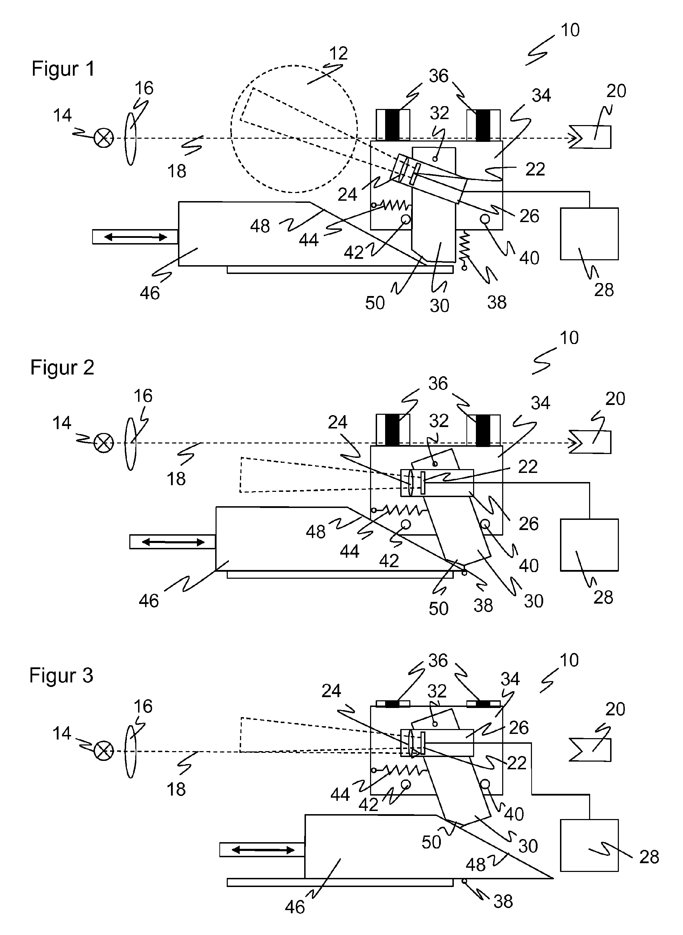

Figur 1 zeigt eine schematische Darstellung einer Lichtstreumessvorrichtung 10 in einem Messmodus. In einem Messbereich oder Messvolumen 12, das durch einen gestrichelten Kreis markiert ist, befindet sich ein Medium, beispielsweise ein Gas oder eine Flüssigkeit. Das Messvolumen 12 ist in der Darstellung offen, kann aber auch durch eine Messzelle mit entsprechenden Fenstern für den Lichtdurchtritt begrenzt sein, wobei dies zumindest im Falle einer Flüssigkeit als Medium auch erforderlich ist.

Ein Lichtsender 14 mit einer zugehörigen Sendeoptik 16 sendet einen Lichtstrahl 18 in das Messvolumen 12. Der Lichtsender 14 umfasst vorzugsweise eine Laserlichtquelle, um einen scharf gebündelten Lichtstrahl 18 hoher Intensität erzeugen zu können. Anteile des Lichtstrahls 18, die das Messvolumen 12 ungehindert transmittieren, werden auf einer gegenüberliegenden Seite in einer Lichtfalle 20 absorbiert oder dort weggespiegelt. Befinden sich in dem Messvolumen 12 Streuzentren, beispielsweise Staub oder andere Partikel, so wird zumindest ein Teil des Lichtstrahls 18 aus der direkten Sichtlinie zu der Lichtfalle 20 gestreut.

Ein Lichtempfänger 22 mit vorgeordneter Empfangsoptik 24 ist auf das Messvolumen 12 gerichtet. Genaugenommen bestimmt sich das wirksame Messvolumen 12 gerade als Überschneidungsbereich von Lichtstrahl 18 und Empfangsapertur. Der Lichtempfänger 22 mit seiner Empfangsoptik 24 kann in einem Gehäuse 26 untergebracht sein. Um die gestreuten Lichtanteile zu bestimmen, steht die optische Achse des Lichtempfängers 22 beziehungsweise von dessen Empfangsoptik 24 in einem spitzen Winkel von beispielsweise 15° zu der optischen Achse des Lichtsenders 14. Damit wird Licht in entsprechender Vorwärtsstreuung empfangen. Für die Messung von Rückstreuung wäre alternativ ein entsprechender stumpfer Winkel zu wählen, d.h. der Lichtempfänger 22 sitzt dann auf der anderen Seite des Messvolumens 12 neben dem Lichtsender 14. Der Lichtempfänger 22 ist beispielsweise eine Photodiode mit vorzugsweise großem Dynamikumfang, um sowohl Streulicht als auch den direkten Lichtstrahl 18 erfassen zu können.

Eine Auswertungseinheit 28 ist mit dem Lichtempfänger 22 verbunden, um aus dessen Empfangssignal und insbesondere der Intensität des Streulichts Rückschlüsse über das Medium in dem Messvolumen 12 zu ziehen. Damit kann beispielsweise eine Sichtweite bestimmt, ein Brand anhand von Rauchentwicklung oder der Grad einer Belastung von Luft mit Schadstoffen erkannt werden.

Figur 1 zeigt die Lichtstreumessvorrichtung 10 in dem Messmodus, bei dem der Lichtempfänger in einem zu messenden Streuwinkel zu dem Messvolumen 12 angeordnet ist. Zum wahlweisen Übergang in einen Prüfmodus, in dem die Empfangsoptik 24 auf Verschmutzungen und sonstige Beeinträchtigungen geprüft wird, ist eine Verstellmechanik vorgesehen, die im Folgenden näher erläutert wird. Dabei ist mit Überprüfen der Empfangsoptik 24 stets auch gemeint, dass eine nach außen abschließende durchsichtige Grenzfläche, etwa ein Fenster des Gehäuses 26 geprüft wird. Die Empfangsoptik 24 kann aber abweichend von der Darstellung auch selbst den äußeren Übergang des Gehäuses 26 bilden.

Die mechanische Anordnung umfasst ein erstes Halteelement 30, an dem die Empfangsoptik 24 beziehungsweise deren Gehäuse 26 dreh- und lagefest angebracht ist. Jegliche Bewegung des ersten Halteelements 30 überträgt sich daher direkt auf die Empfangsoptik 24. Das erste Halteelement 30 ist an einer Drehachse 32 gehaltert, beispielsweise einem Stift, einem Zapfen oder einer Stange und kann somit um die Drehachse verschwenkt oder gedreht werden.

Die Drehachse 32 ist an einem zweiten Halteelement 34 fixiert, welches selbst drehfest gegenüber der Streulichtmessvorrichtung 10 ist. Das zweite Halteelement 34 wiederum ist auf Schienen 36 gelagert und kann somit in einer Richtung senkrecht zu der optischen Achse des Lichtsenders 14 und damit dem Lichtstrahl 18 verschoben werden. Eine erste Feder 38 ist einerseits an dem zweiten Halteelement 34 befestigt und andererseits in der Streulichtmessvorrichtung 10 fixiert. Eine Verschiebung des zweiten Halteelements 34 erfolgt somit gegen die Federkraft der ersten Feder 38, und bei Entlastung zieht die erste Feder 38 das zweite Halteelement 34 in eine Ausgangsposition zurück. Bei entsprechender Lage könnte dies alternativ auch durch Eigengewicht erfolgen.

Weiterhin befinden sich auf dem zweiten Halteelement 34 ein erster Anschlag 40 und ein zweiter Anschlag 42, welche die mögliche Drehbewegung des ersten Halteelements 30 zu beiden Seiten begrenzen. Eine zweite Feder 44 ist an dem ersten Halteelement 30 und dem zweiten Halteelement 34 befestigt, so dass die Drehbewegung des ersten Halteelements 30 um die Drehachse 32 gegen die Federkraft der zweiten Feder 44 erfolgt. Wirkt keine andere Kraft auf das erste Halteelement 30 ein, so zieht die zweite Feder 44 das erste Halteelement 30 in eine Ausgangsposition der Drehbewegung zurück.

Ein Schiebeelement 46 ist dazu vorgesehen, geradlinig zwischen einer ersten Position und einer zweiten Position verfahren zu werden. Die Verschiebung erfolgt vorzugsweise parallel zu der optischen Achse des Lichtsenders 14, ein Schrägstellen dagegen wäre aber möglich. Das Schiebeelement 46 berührt mit einer abgeschrägten Fläche 48 das erste Halteelement 30. Im Bereich der Berührungsfläche weist auch das erste Halteelement eine Abschrägung 50 auf. Die Bewegung des Schiebeelements 46 wird durch einen nicht dargestellten Antrieb bewirkt, welcher beispielsweise von der Auswertungseinheit 28 angesprochen wird.

Das Zusammenspiel dieser soeben beschriebenen Elemente der Verstellmechanik wird durch die Figuren 2 und 3 verdeutlicht. Der Prüfmodus hat zwei Phasen, wobei in der ersten Phase die Empfangsoptik 24 verdreht wird, so dass die anfänglich in dem Streuwinkel zu dem Lichtstrahl 18 stehende optische Achse der Empfangsoptik parallel und damit in direkte Sichtlinie zu dem Lichtsender 14 ausgerichtet wird.

Der Abschluss dieser ersten Phase ist in Figur 2 gezeigt. Das Schiebeelement wird aus der ersten Position des Messmodus' gemäß Figur 1 in eine Zwischenposition verschoben. Dabei nimmt das Schiebeelement 46 das erste Halteelement 30 durch die Berührung zwischen der abgeschrägten Fläche 48 mit dem ersten Halteelement 30 mit. Das erste Halteelement 30 weicht aus, indem es sich um die Drehachse 32 dreht, und zwar so lange, bis der Anschlag 40 eine weitere Drehung blockiert.

In einer zweiten Phase wird dann die Empfangsoptik 24 parallel verschoben, so dass sich unter Aufrechthalten einer direkten Sichtlinie zwischen Lichtsender 14 und Lichtempfänger 22 der Lichtstrahl 18 über die Empfangsoptik 24 bewegt und sie somit ortsaufgelöst nach Verschmutzungen oder anderen Beeinträchtigungen abtastet.

Figur 3 zeigt die Streulichtmessvorrichtung 10 bei Abschluss oder kurz vor Abschluss der zweiten Phase. Das Schiebeelement 46 wird aus der Zwischenposition gemäß Figur 2 weiter in Richtung der in Figur 3 erreichten zweiten Position verschoben. Das erste Halteelement 30 kann dem Schiebeelement 46 wegen des Anschlags 40 nicht mehr durch eine Drehbewegung ausweichen. Stattdessen sorgt die abgeschrägte Fläche 48 dafür, dass das zweite Halteelement 34 auf den Schienen 36 verfahren wird. Der Bereich der Verschiebung des zweiten Halteelements 34 sollte ungeachtet möglicher Abweichungen in der Darstellung vorzugsweise gerade so beginnen, dass der Lichtstrahl 18 in der Zwischenposition des Schiebeelements 46 einen unteren Endbereich der Empfangsoptik 24 und in der zweiten Position des Schiebeelements 46 einen oberen Endbereich der Empfangsoptik 24 trifft. Die Empfangsoptik 24 wird dann gerade einmal vollständig von dem Lichtstrahl 18 überstrichen.
Die Auswertungseinheit 28 hat eine ab Werk vorgegebene oder eingelernte Erwartungshaltung, welche Intensität für fehlerfreien Betrieb gemessen werden sollte, und kann deshalb in dem Prüfmodus Abweichungen erkennen und erforderliche Maßnahmen wie eine Wartungsanforderung oder eine dynamische Anpassung von Sendeleistung oder Empfangsempfindlichkeit einleiten. Durch zyklischen Wechsel in die Prüfposition überprüft sich somit die Streulichtmessvorrichtung 10 selbst auf Fehler durch Verschmutzung, Beschädigung oder andere Beeinträchtigung der Empfangsoptik 24. Dabei werden vorzugsweise zugleich auch Beeinträchtigungen der Sendeoptik 16 erkannt.

Wird nach Beendigung einer Prüfung zum Rückwechsel aus dem Prüfungsmodus in den Messmodus das Schiebeelement 46 wieder in die erste Position zurückbewegt, so zieht zunächst die erste Feder 38 das zweite Halteelement 34 auf den Schienen 36 in seine Ausgangsposition zurück. Währenddessen kann eine weitere Abtastung der Empfangsoptik 24 erfolgen. Anschließend zieht sich auch die zweite Feder 44 zusammen und dreht dabei das erste Halteelement 30 um die Drehachse 32, bis das erste Halteelement 30 der zweiten Feder 44 wegen des zweiten Anschlags 42 nicht weiter folgen kann und damit die Empfangsoptik wieder die Ausgangsposition des Messmodus' erreicht hat.

## Patentansprüche

1. Vorrichtung (10) zur Messung der Lichtstreuung aus einem Messbereich (12), die einen Lichtsender (14) zum Aussenden eines Lichtstrahls (18) in den Messbereich (12) und einen Lichtempfänger (22) mit einer Empfangsoptik (24) zum Erfassen von in dem Messbereich (12) gestreutem Licht aufweist, wobei eine Verstelleinheit vorgesehen ist, um zwischen einem Messmodus, in dem die optischen Achsen von Lichtsender (14) und Empfangsoptik (24) in einem Winkel zueinander stehen und sich in dem Messbereich (12) schneiden, und einem Prüfmodus zu wechseln, in dem die optischen Achsen von Lichtsender (14) und Empfangsoptik (24) parallel zueinander ausgerichtet werden und der Lichtstrahl (18) die Empfangsoptik (24) zur Erkennung von Verschmutzungen sukzessive überstreicht,
**dadurch gekennzeichnet,**
**dass** die Empfangsoptik (24) an einem ersten Halteelement (30) befestigt ist, das drehbar an einer verschiebbaren Drehachse (32) gehaltert ist, dass die Verstelleinheit ein Schiebeelement (46) aufweist, das geradlinig von einer ersten Position über eine Zwischenposition in eine zweite Position verschiebbar ist und eine abgeschrägte Fläche (48) aufweist, die mit dem ersten Halteelement (30) in Berührung steht und dass die Verstelleinheit in dem Prüfmodus zunächst die Empfangsoptik (24) mittels Verschieben des Schiebelements (46) aus der ersten Position in die Zwischenposition unter Mitnehmen des ersten Halteelements (30) durch die Berührung zwischen der abgeschrägten Fläche (48) mit dem ersten Halteelement (30) um die Drehachse (32) dreht, bis die optische Achse der Empfangsoptik (24) parallel zu der optischen Achse des Lichtsenders (14) steht, und dann mittels Verschieben des Schiebelements (46) aus der Zwischenposition in die zweite Position die Drehachse (32) samt der Empfangsoptik (24) so parallel verschiebt, dass der Lichtstrahl (18) sich über die Empfangsoptik (24) bewegt und sie somit ortsaufgelöst abtastet.

2. Vorrichtung (10) nach Anspruch 1,
die ein drehfestes zweites Halteelement (34) aufweist, von dem die Drehachse (32) ausgeht.

3. Vorrichtung (10) nach Anspruch 2,
wobei das zweite Halteelement (34) verschiebbar gelagert ist, insbesondere auf mindestens einer Schiene (36) oder Linearführung.

4. Vorrichtung (10) nach einem der vorhergehenden Ansprüche,
wobei ein erstes Rückstellelement (38) vorgesehen ist, um die Empfangsoptik (24) beim Wechsel von dem Prüfmodus in den Messmodus in eine Ausgangsposition zurückzuschieben.

5. Vorrichtung (10) nach einem der vorhergehenden Ansprüche,
wobei ein erster Anschlag (40) vorgesehen ist, um die Drehbewegung zu been-den, wenn die optische Achse der Empfangsoptik (24) parallel zu der optischen Achse des Lichtsenders (14) steht.

6. Vorrichtung (10) nach einem der vorhergehenden Ansprüche,
wobei ein zweites Rückstellelement (44) vorgesehen ist, um die Empfangsoptik (24) beim Wechsel von dem Prüfmodus in den Messmodus in eine Ausgangsposition zurückzudrehen.

7. Vorrichtung (10) nach einem der vorhergehenden Ansprüche,
wobei ein zweiter Anschlag (42) vorgesehen ist, um die Empfangsoptik (24) höchstens bis in die Ausgangsposition zurückzudrehen.

8. Verfahren zum Prüfen einer Empfangsoptik (24) einer Vorrichtung zur Messung der Lichtstreuung nach einem der vorhergehenden Ansprüche, wobei die Empfangsoptik (24) in einem Prüfmodus durch den Lichtstrahl (18) abgetastet wird, indem die optische Achse der Empfangsoptik (24) verkippt wird, bis sie parallel zu dem Lichtstrahl (18) steht, und anschließend parallelverschoben wird, wobei die Empfangsoptik (24) durch Verschieben des Schiebeelements (46) von der ersten Position in die zweite Position zunächst um die Drehachse (32) verkippt und anschließend die Drehachse (32) samt der Empfangsoptik (24) verschoben wird.

## Claims

1. An apparatus (10) for measuring the light scattered from a measured zone (12), the apparatus having a light transmitter (14) for transmitting a light beam (18) into the measured zone (12) and having a light receiver (22) with a reception optics (24) for detecting light scattered in the measured zone (12), wherein an adjustment unit is provided to change between a measuring mode in which the optical axes of the light transmitter (14) and of the reception optics (24) stand at an angle with respect to one another and intersect in the measured zone (12) and a test mode in which the optical axes of the light transmitter (14) and of the reception optics (24) are aligned in parallel with one another, wherein the light beam (18) successively sweeps over the reception optics (24) for recognizing contaminants,
**characterized in that**,
the reception optics (24) is fastened to a first holding element (30) which is rotatably held at a displaceable rotary axle (32),
**in that** the adjustment unit has a pushing element (46) which is displaceable in a straight line from a first position through an intermediate position into a second position, and has a chamfered surface (48) which is in contact with the first holding element (30),
and **in that** in the test mode the adjustment unit first rotates the reception optics (24) about the rotary axle (32) by displacing the pushing element (46) from the the first position into the intermediate position among taking the first holding element (30) through touching the first holding element (30) between the chamfered surface (48) until the optical axis of the reception optics (24) is in parallel with the optical axis of the light transmitter (14) and then displaces the rotary axle (32) together with the reception optics (24) by displacing the pushing element (46) from the intermediate position into the second position such that the light beam (18) moves over the receptions optics (24) and hence scans it with a spatial resolution.

2. An apparatus (10) in accordance with claim 1,
the apparatus having a rotationally fixed second holding element (34) from which the rotary axle (32) starts.

3. An apparatus (10) in accordance with claim 2,
wherein the second holding element (34) is displaceably supported, in particular on at least one rail (36) or linear guide.

4. An apparatus (10) in accordance with any preceding claim,
wherein a first restoring element (38) is provided to push the reception optics (24) back into a starting position on the change from the test mode into the measuring mode.

5. An apparatus (10) in accordance with any preceding claim,
wherein a first abutment (40) is provided to end the rotational movement when the optical axis of the reception optics (24) is in parallel with the optical axis of the light transmitter (14).

6. An apparatus (10) in accordance with any preceding claim,
wherein a second restoring element (44) is provided to rotate the reception optics (24) back into a starting position on the change from the test mode into the measuring mode.

7. An apparatus (10) in accordance with any preceding claim,
wherein a second abutment (42) is provided, to rotate the reception optics (24) back at most up to and into the starting position.

8. A method of testing a reception optics (24) of an apparatus for measuring the light scattered according to any preceding claim, wherein the reception optics (24) is scanned by a light beam (18) in a test mode in that the optical axis of the reception optics (24) is tilted until it is in parallel with the light beam (18) and is subsequently displaced in parallel, wherein the reception optics (24) is first tilted about a rotary axle (32) by displacing the pushing element (46) from the first position to the second position and subsequently the rotary axle (32) is displaced together with the reception optics (24).

## Revendications

1. Dispositif (10) pour mesurer la diffusion de la lumière venant d'une zone de mesure (12), qui comprend un émetteur de lumière (14) pour émettre un rayon de lumière (18) vers la zone de mesure (12) et un récepteur de lumière (22) avec une optique de réception (24) pour détecter la lumière diffusée dans la zone de mesure (12), dans lequel il est prévu une unité de réglage afin de changer entre un mode de mesure dans lequel les axes optiques de l'émetteur de lumière (14) et de l'optique de réception (24) forment un angle l'un par rapport à l'autre et se recoupent dans la zone de mesure (12), et un mode de contrôle dans lequel les axes optiques de l'émetteur de lumière (14) et de l'optique de réception (24) sont orientés parallèlement l'un à l'autre, et le rayon de lumière (18) balaye l'optique de réception (24) de manière successive pour la reconnaissance de salissures,
**caractérisé en ce que**
l'optique de réception (24) est fixée sur un premier élément de maintien (30), qui est retenu en rotation sur un axe de rotation déplaçable (32), **en ce que** l'unité de réglage comprend un élément coulissant (46), qui est déplaçable en ligne droite depuis une première position via une position intermédiaire jusque dans une seconde position, et présente une surface en oblique (48), qui est en contact avec le premier élément de maintien (30), et **en ce que**, dans le mode de contrôle, l'unité de réglage fait tout d'abord tourner l'optique de réception (24) au moyen d'un déplacement de l'élément coulissant (46) depuis la première position jusque dans la position intermédiaire en entraînant le premier élément de maintien (30) grâce au contact entre la surface en oblique (48) avec le premier élément de maintien (30), autour de l'axe de rotation (32) jusqu'à ce que l'axe optique de l'optique de réception (24) soit parallèle à l'axe optique de l'émetteur de lumière (14), et ensuite, au moyen d'un déplacement de l'élément coulissant (46) hors de la position intermédiaire jusque dans la seconde position, il déplace l'axe de rotation (32) ensemble avec l'optique de réception (24) de manière parallèle de telle façon que le rayon de lumière (18) se déplace sur l'optique de réception et balaye celle-ci ainsi avec résolution locale.

2. Dispositif (10) selon la revendication 1,
qui comprend un second élément de maintien (34) solidaire en rotation, depuis lequel part l'axe de rotation (32).

3. Dispositif (10) selon la revendication 2,
dans lequel le second élément de maintien (34) est monté de façon déplaçable, en particulier sur au moins un rail (36) ou un guidage linéaire.

4. Dispositif (10) selon l'une des revendications précédentes,
dans lequel il est prévu un premier élément de rappel (38) afin de faire coulisser l'optique de réception (24) en retour dans une position de départ lors du changement du mode de contrôle vers le mode de mesure.

5. Dispositif (10) selon l'une des revendications précédentes,
dans lequel il est prévu une première butée (40), afin de terminer le mouvement de rotation quand l'axe optique de l'optique de réception (24) est parallèle à l'axe optique de l'émetteur de lumière (14).

6. Dispositif (10) selon l'une des revendications précédentes,
dans lequel il est prévu un second élément de rappel (14), afin de faire tourner l'optique de réception (24) en retour jusque dans une position de départ lors du changement du mode de contrôle vers le mode de mesure.

7. Dispositif (10) selon l'une des revendications précédentes,
dans lequel il est prévu une seconde butée (42), afin de faire tourner l'optique de réception (24) tout au plus jusque dans la position de départ.

8. Procédé pour le contrôle d'une optique de réception (24) d'un dispositif pour la mesure de diffusion de la lumière selon l'une des revendications précédentes, dans lequel l'optique de réception (24) est palpée par le rayon de lumière (18) dans un mode de contrôle, en basculant l'axe optique de l'optique de réception (24) jusqu'à ce qu'il soit parallèle au rayon de lumière (18), et il est ensuite déplacé parallèlement, dans lequel l'optique de réception (24) est tout d'abord basculée autour de l'axe de rotation (32) par déplacement de l'élément coulissant (46) de la première position jusqu'à la seconde position, et l'axe de rotation (32) est ensuite déplacé conjointement avec l'optique de réception (24).
